# EUROPÄISCHE PATENTANMELDUNG

(11) **EP 0 908 876 A2**
(43) Veröffentlichungstag der Anmeldung: **14.04.1999**
(21) Anmeldenummer: 98115562.5
(22) Anmeldetag: 19.08.1998
(51) Int. Cl.: G11B 7/26, B32B 31/12, B29C 65/52

(54) **Verfahren zum Verkleben eines flachen, kreisscheibenförmigen ersten Substrats aus einem Kunststoff mit einem ebensolchen zweiten Substrat zu einer digital video disc und Vorrichtung zur Durchführung des Verfahrens**

(30) Priorität: 08.10.1997 DE 19744408; 08.12.1997 DE 19754390
(71) Anmelder: Leybold Systems GmbH, D-63450 Hanau am Main (DE)
(72) Erfinder: Rack, Andreas, 63450 Hanau (DE); Szellas, Stefan, 24631 Langwedel (DE); Sauer, Peter, 36381 Schlüchtern (DE)

(57) **Zusammenfassung**

Für das Verkleben zweier Substrate in sechs Verfahrensschritten zu einer digital video disc mittels eines motorisch antreibbaren Tellers (2) zur Halterung des ersten Substrats (5), eines oberhalb des Tellers (2) angeordneten Kleberspenders und mittels einer Vorrichtung zum Greifen, Halten und vertikalen Bewegen des zweiten Substrats (7) weist die dem ersten Substrat (5) zugewandte Seite des Tellers (2) eine zu seiner Rotationsachse (R) konzentrische, radial äußere, kreisringförmige, ebene Partie (10) und eine sich an diese anschließende radial innere Partie (11) auf, wobei die dem Substrat (5) zugewandte Fläche (F) dieser inneren Partie (11) von der Mantelfläche eines flachen, geraden Kreiskegelstumpfes gebildet wird, dessen Kegelspitze (S) unterhalb der Auflageebene (E) für das Substrat (5) die Rotationsachse (R) trifft, wobei im Übergangsbereich von der Kreisringpartie (10) zur kegelförmigen Partie (11) eine koaxial zur Rotationsachse verlaufende Ringnut (12) in den Teller (2) eingeschnitten ist, die über im Teller verlaufende Kanäle (13,13',...) an eine Unterdruckquelle angeschlossen ist und mit sich von der Ringnut (12) aus radial nach innen zu erstreckenden tränen- oder fingerförmigen Vertiefungen oder Aussparungen (14,14',...) in der kegelförmigen Partie (11) korrespondiert.

## Beschreibung

Die Erfindung betrifft ein Verfahren zum Verkleben eines flachen, kreisscheibenförmigen ersten Substrats aus einem Kunststoff mit einem ebensolchen zweiten Substrat, beispielsweise zu einer digital video disc und die Vorrichtung zur Durchführung des Verfahrens.

Bekannt ist eine Vorrichtung zum Halten, für den Transport und die Bearbeitung eines flachen, kreisscheibenförmigen Substrats (DE 295 12 381), insbesondere einer CD oder CD-ROM, bestehend aus einem Gehäuse mit einer zentralen, an eine Unterdruckquelle anschließbaren Kammer, mit einer Vielzahl mit dieser über Saugkanäle verbundenen, auf der dem Substrat zugewandten Kammerwand verteilt angeordneten Saugnäpfen aus einem elastischen Werkstoff und mit mehreren mit einem im Gehäuse vorgesehenen Verteilerkanal korrespondierenden, etwa in der Ebene der Saugnäpfe endenden und sich parallel zu den Saugkanälen erstreckenden Dosierdüsen, wobei der Verteilerkanal mit einem Anschluß zur Verbindung mit einer Farbquelle versehen ist.

Bekannt ist weiterhin eine Vorrichtung zum Lackieren eines flachen, kreisscheibenförmigen Substrats (DE 295 12 500), insbesondere einer CD, bestehend aus einem motorisch angetriebenen, um eine vertikale Achse rotierbaren Teller für die Halterung des Substrats, einem oberhalb des Tellers angeordneten Lackspender, mit einer mit dem Teller umlaufenden, diesen umschließenden und partiell mit dem Teller über Stege verbundenen, ringförmigen Manschette, einem ortsfesten Gehäuse mit einem die Manschette von außen umgreifenden kreisringförmigen Randteil, wobei die Manschette aus zwei Partien gebildet ist, von denen die eine Partie als eine einen geraden Kegelstumpf bildende Hülse ausgeformt ist, die den Teller umschließend sich von dessen radial äußeren Rand aus ein Stück nach oben zu erstreckt und die andere Partie als eine einen geraden Kegelstumpf bildende, den Teller umschließende, sich von dessen äußeren Rand aus nach unten zu erstreckende Hülse ausgebildet ist, so daß die sich nach oben zu verjüngende Innenwand der oberen Manschettenpartie vom um seine vertikale Achse rotierenden Teller in radialer Richtung und nach oben zu abgeschleuderte Farbteilchen auffängt und nach unten zu ablaufen läßt, wo die Teilchen über von den Stegen gebildete Ausnehmungen im radial äußeren Randbereich des Tellers an der sich nach unten zu verjüngenden Innenwand der unteren Manschettenpartie ablaufen.

Es ist auch ein Verfahren zum partiellen Entfernen von dünnen Schichten von einem Substrat bekannt (DE 42 02 194), bei dem eine vorzugsweise ebene Oberfläche des Substrats mit einer dünnen Schicht, beispielsweise eine Lack-, Metallschicht oder dergleichen versehen ist, in Rotation um eine Normale zur Oberfläche versetzt und auf den Randbereich der Oberfläche ein Lösungs- bzw. Ätzmittel gebracht wird, das unter Mitnahme des aufgelösten bzw. abgeätzten Schichtbereichs durch Zentrifugalkraft vom Substrat abgeschleudert wird, wobei die Oberfläche des zu entfernenden Schichtbereichs mittels einer Schablone zumindest teilweise maskiert wird, die eine der zu entfernenden Schicht entsprechende Innenkontur besitzt und zur Bildung einer Kapillaren in geringem Abstand zur Oberfläche angeordnet ist, daß unter Zuführen von Lösungs- bzw. Ätzmittel die Schablone synchron mit dem Substrat bei einer bestimmten Drehzahl in Rotation versetz wird und daß nach einer bestimmten Zeit das Zuführen von Lösungs- bzw. Ätzmittel gestoppt und das mit dem aufgelösten bzw. abgeätzten Schichtbereich versehene Lösungs- bzw. Ätzmittel bei entsprechend erhöhter Drehzahl abgeschleudert wird.

Darüber hinaus ist eine Vorrichtung zum Greifen und Halten eines flachen, vorzugsweise kreisscheibenförmigen Substrats mit einer zentralen Öffnung, beispielsweise einer Compact Disc bekannt (DE 195 29 945), bestehend aus mehreren fingerförmigen, in einem Gehäuse kippbar gelagerten Greifern, wobei die Greifer in Öffnungen oder Durchbrüchen im Kopfteil des Gehäuses gehalten und geführt sind, die Kippbewegungen der Greifer um Achsen quer zur Längsachse des Gehäuses gestatten, wobei die Kippachsen aller Greifer sich in einer Ebene erstrecken und zusammen ein die Längsachse umschließendes Vieleck bilden, wobei an den dem Substrat abgekehrten Enden der Greifer jeweils Magnete fest angeordnet sind, die mit einem im Gehäuse oberhalb der Magnete vorgesehenen Elektromagneten zusammenwirken, dessen Magnetfeldachse mit der Längsachse des Gehäuses zusammenfällt und der die mit Magneten versehenen Greiferenden je nach Polung des Elektromagneten zwischen zwei Anschlägen hin- und herbewegt.

Schließlich hat man bereits eine Vorrichtung für den Transport von digital video discs, von als Karusselltransporteinrichtungen ausgebildeten Ausgangsstationen über mehrere Prozeßstationen zu Endstationen vorgeschlagen (Patentanmeldung DE 197 29 525.8), wobei die Prozeßstationen das Bearbeiten, z. B. Beschichten, Kontrollieren, Sortieren und Sammeln der Substrate bewirken, und wobei Greiferarme mit Greifern oder Saughebern den Weitertransport der Substrate von Station zu Station ermöglichen, wobei eine Motor-Getriebeeinheit mit einer Schwenkeinrichtung und zwei getrennt voneinander ansteuerbaren Hubeinrichtungen vorgesehen sind, die mit Manipulatoren oder Greiferarmen zusammenwirken, wobei das eine Förderstation bildende Getriebe mit Greiferarmen in gleichem Abstand von mehreren Stationen, beispielsweise der Bereitstellstation, den Lackier-/Klebestationen, der Rückförderstation und der Prüfstation angeordnet ist, und wobei die beiden Hubeinrichtungen der Motor-Getriebeeinheit gleichzeitig mit ihren Greiferarmen gleiche und/oder unterschiedliche Hubbewegungen (Vertikalbewegungen) und diese überlagernde oder sich an diese anschließende Schwenkbewegungen ausführen.

Der vorliegenden Erfindung liegt die Aufgabe zugrunde, ein Verfahren und eine Vorrichtung zu seiner Durchführung anzugeben, nach denen zwei plane Substrate zu einer digital video disc blasenfrei und gleichmäßig miteinander verklebt werden können, und zwar derart, daß die zwischen den beiden Scheiben aushärtende Kleberschicht durchgehend von gleicher Dichte und Zusammensetzung ist und sich dazu vor dem Aushärten gleichmäßig über die gesamte Substratfläche verteilt.

Der Erfindung liegt ferner die Aufgabe zugrunde, ein Verfahren und eine Vorrichtung anzugeben, die mit Hilfe einer bereits früher vorgeschlagenen Vorrichtung für den Transport von digital video discs durchführbar sind.

Diese Aufgabe wird dadurch gelöst, daß in einem ersten Verfahrensschritt der Kleberspender soweit in Richtung auf die Rotationsachse des das erste Substrat haltenden Tellers bewegt wird bis die Düse etwa auf eine mittlere Zone des Substrats ausgerichtet ist, daß in einem zweiten Verfahrensschritt eine vorherbestimmte Menge Kleber aus der Düse auf das Substrat gegeben wird, wobei der Teller eine Drehbewegung ausführt, daß in einem dritten Verfahrensschritt nach dem Bewegen des Kleberspenders aus dem Bereich des Substrats das zweite Substrat von der Greif- und Haltevorrichtung soweit auf das erste Substrat abgesenkt wird, daß ein vorherbestimmter schmaler Spalt zwischen beiden Substraten verbleibt und der Kleber über die Oberseite des ersten Substrats verteilt ist, daß nach kurzer Verweilzeit in einem vierten Verfahrensschritt die Greif- und Haltevorrichtung das zweite Substrat gegenüber dem ersten verdreht und dieses gleichzeitig soweit auf das erste Substrat zu bewegt, bis beide Substrate fest aufeinanderliegen, daß in einem fünften Verfahrensschritt die Greif- und Haltevorrichtung vom zweiten Substrat gelöst und in ihre Ausgangsposition zurückbewegt und beide miteinander verklebten Substrate vom Teller kurzzeitig zum Entfernen des überschüssigen Klebers in eine rasche Rotation versetzt werden und daß in einem sechsten Verfahrensschritt beide Substrate zueinander ausgerichtet und einer UV-Trockenquelle zugeführt werden.

Zur Durchführung des Klebevorganges gelangt erfindungsgemäß eine Vorrichtung zum Einsatz, bei der die dem ersten Substrat zugewandte Seite des Tellers eine zu seiner Rotationsachse konzentrische, radial äußere, kreisringförmige, ebene Partie und eine sich an diese anschließende radial innere Partie aufweist, wobei die dem Substrat zugewandte Fläche dieser inneren Partie von der Mantelfläche eines flachen, geraden Kreiskegelstumpfes gebildet wird, dessen Kegelspitze unterhalb der Auflageebene für das Substrat die Rotationsachse trifft, wobei im Übergangsbereich von der Kreisringpartie zur kegelförmigen Partie eine koaxial zur Rotationsachse verlaufende Ringnut in den Teller eingeschnitten ist, die einerseits über im Teller verlaufende Kanäle an eine Unterdruckquelle angeschlossen ist und andererseits mit sich von der Ringnut aus radial nach innen zu erstreckenden tränen- oder fingerförmigen Vertiefungen oder Aussparungen in der kegelförmigen Fläche korrespondiert, wobei der Durchmesser und die Tiefe der Ringnut etwa so bemessen sind, daß sie dem Ringwulst des Substrats entsprechen.

Die Erfindung läßt die verschiedensten Ausführungsmöglichkeiten zu; eine davon ist anhand der anhängenden Zeichnungen rein schematisch näher dargestellt und zwar zeigen:
- Fig. 1: einen Teller mit auf diesem aufliegenden ersten Substrat,
- Fig. 2: den Teller gemäß Fig. 1 mit einer auf das erste Substrat aufgetragenen vorbestimmten Portion Kleber,
- Fig. 3: den Teller gemäß Fig. 2 mit dem oberhalb des ersten Substrats gehaltenen zweiten Substrat,
- Fig. 4: den langsam rotierenden Teller mit auf diesem aufliegenden den Kleber tragenden ersten Substrat und dem von der Greif- und Haltevorrichtung bis auf die Kleberschicht abgesenkten, jedoch ortsfest gehaltenen zweiten Substrat,
- Fig. 5: die beiden übereinander angeordneten und gegeneinander gepreßten und auf dem rotierenden Teller aufliegenden Substrate,
- Fig. 6: den Teller mit den beiden aufliegenden Substraten und einen an diesen heranbewegten Trockner zur Beschleunigung der Kleberaushärtung,

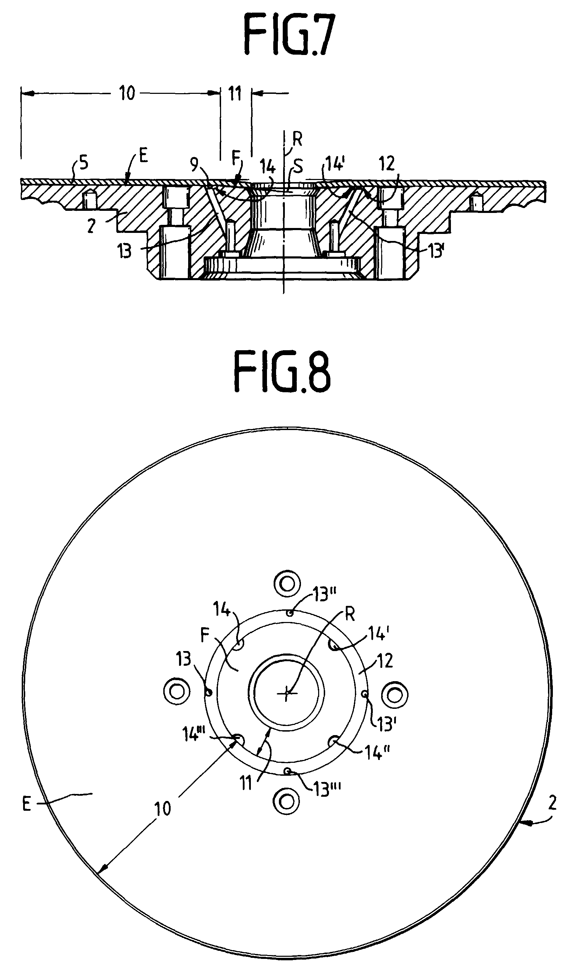

- Fig. 7: den Schnitt quer durch den Teller in einer vergrößerten Darstellung und
- Fig. 8: die Draufsicht auf den Teller gemäß Fig. 7.

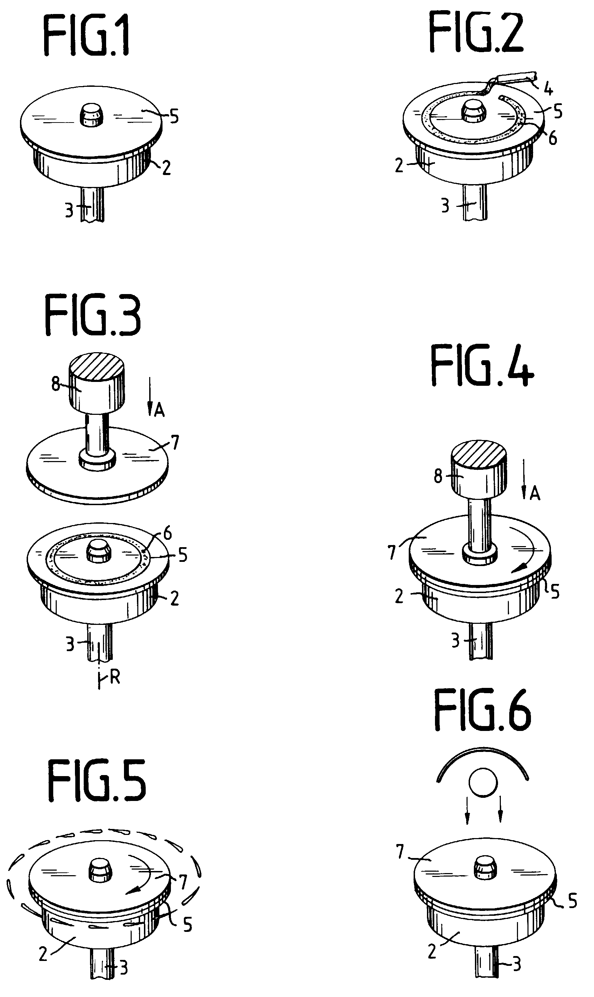

Der Teller 2 ist mit der Welle 3 einer Motor-Getriebeeinheit drehfest gekoppelt und kann von dieser um die vertikale Rotationsachse R gedreht werden. Von der Seite her ist die Düse 4 einer Vorrichtung zum dosierten Auftragen von Kleber 6 in den Bereich des ersten Substrats 5 bewegbar, wobei der Kleberauftrag während einer langsamen Drehung des Tellers 2 erfolgt. Nach dem Auftrag der vorbestimmten Menge Kleber 6 in Gestalt eines Klebstoffrings (Fig. 3) wird das zweite Substrat 7 in Pfeilrichtung A von oben her gegen das erste Substrat 5 bewegt und zwar soweit, daß einerseits noch ein geringer Abstand zwischen den beiden Substraten 5 und 7 verbleibt und andererseits der Kleber im zwischen beiden Substraten 5, 7 verbleibenden Spalt verteilt wird. Fig. 4 zeigt, daß das zweite Substrat 7 nun noch um ein sehr geringes Maß von der Greifervorrichtung 8 gegen das erste Substrat 5 verschoben wird, wobei eine geringe Menge von überschüssigem Kleber aus den von den Substraten 5, 7 gebildeten Spalt austritt. Nach dem Lösen des zweiten Substrats 7 vom Greifer 8 wird der überschüssige Kleber durch eine rasche Drehbewegung radial abgeschleudert.

Der Teller 2 weist auf seiner dem Substrat 5 zugekehrten Seite eine kreisringförmige ebene Fläche 10 auf, an die sich radial nach innen zu eine kegelige Vertiefung anschließt, wobei diese kegelige Partie 11 konzentrisch zur Rotationsachse R angeordnet ist. Die Partie 11 ist von der Mantelfläche eines sehr flachen Kegelstumpfes gebildet, wobei die Spitze 5 dieses Kegelstumpfes die Rotationsachse R unterhalb der Ebene E trifft. Das kreisscheibenförmige Substrat 5 weist einen Ringwulst 9 auf, für den in den Teller 2 eine entsprechend bemessene Ringnut 12 eingeschnitten ist, die ihrerseits über Kanäle 13,13',... an eine Vakuumquelle angeschlossen ist. Auf der radial inneren Kante der Ringnut 12 sind finger- oder tränenförmige Abflachungen 14,14',... vorgesehen, so daß bei auf der Partie 10 aufliegendem Substrat 5 die radial innen liegende Partie 11 des Substrats 5 vom Unterdruck im Spalt zwischen der Substratunterseite und der Fläche F bzw. den Abflachungen 14,14',... nach unten gezogen wird, wobei sich die Partie 11 des Substrats 5 kegelig verformt, so daß der Kleber 6 eine ungehinderte Ausbreitung radial nach innen zu erfährt und einen scharf konturierten Kleber-Abriß ergibt.

### Bezugszeichenliste

- 2: Teller
- 3: Welle
- 4: Düse
- 5: erstes Substrat
- 6: Kleber
- 7: zweites Substrat
- 8: Greifervorrichtung
- 9: Zentrierwulst
- 10: äußere Partie
- 11: innere Partie
- 12: Ringnut
- 13,13',...: Kanal
- 14,14',...: Aussparung
- E: Auflageebene für das Substrat 5
- F: Fläche der kegeligen Partie 11
- R: Rotationsachse des Tellers 2
- S: Kegelspitze

## Patentansprüche

1. Verfahren zum Verkleben eines flachen, kreisscheibenförmigen ersten Substrats (5) aus einem Kunststoff mit einem ebensolchen zweiten Substrat (7) zu einer digital video disc, mit einem motorisch antreibbaren, um eine vertikale Achse (R) rotierbaren Teller (2) zur Halterung des ersten Substrats (5), einem oberhalb des Tellers (2) angeordneten Kleberspender (4) mit einer Düse für eine portionierte Abgabe des Klebers (6) und mit einer Vorrichtung (8) zum Greifen, Halten und vertikalen Bewegen des zweiten Substrats (7) aus einer Position oberhalb der Ebene des Kleberspenders (4) bis auf die Position des ersten Substrats (5), **dadurch gekennzeichnet**, daß in einem ersten Verfahrensschritt der Kleberspender (4) soweit in Richtung auf die Rotationsachse (R) des das erste Substrat (5) haltenden Tellers (2) bewegt wird bis die Düse etwa auf eine mittlere Zone des Substrats (5) ausgerichtet ist, daß in einem zweiten Verfahrensschritt eine vorherbestimmte Menge Kleber (6) aus der Düse auf das Substrat (5) gegeben wird, wobei der Teller (2) eine Drehbewegung ausführt, daß in einem dritten Verfahrensschritt nach dem Herausbewegen des Kleberspenders (4) aus dem Bereich des Substrats (5) das zweite Substrat (7) von der Greif- und Haltevorrichtung (8) soweit auf das erste Substrat (5) abgesenkt wird, daß ein vorherbestimmter schmaler Spalt zwischen beiden Substraten (5 und 7) verbleibt und der Kleber (6) über die Oberseite des ersten Substrats (5) verteilt ist, daß nach kurzer Verweilzeit in einem vierten Verfahrensschritt die Greif- und Haltevorrichtung (8) das zweite Substrat (7) soweit auf das erste Substrat (5) zu bewegt, bis beide Substrate (5 und 7) fest aufeinanderliegen, daß in einem fünften Verfahrensschritt die Greif- und Haltevorrichtung (8) vom zweiten Substrat (7) gelöst und in ihre Ausgangsposition zurückbewegt und beide miteinander verklebten Substrate (5 und 7) vom Teller kurzzeitig zum Entfernen des überschüssigen Klebers in eine rasche Rotation versetzt werden und daß in einem sechsten Verfahrensschritt beide Substrate (5 und 7) zueinander ausgerichtet und einem UV-Trockner (9) zugeführt werden.

2. Vorrichtung zur Durchführung des Verfahrens nach Anspruch 1, **dadurch gekennzeichnet,** daß die dem ersten Substrat (5) zugewandte Seite des Tellers (2) eine zu seiner Rotationsachse (R) konzentrische, radial äußere, kreisringförmige, ebene Partie (10) und eine sich an diese anschließende radial innere Partie (11) aufweist, wobei die dem Substrat (5) zugewandte Fläche (F) dieser inneren Partie (11) von der Mantelfläche eines flachen, geraden Kreiskegelstumpfes gebildet wird, dessen Kegelspitze (S) unterhalb der Auflageebene (E) für das Substrat (5) die Rotationsachse (R) trifft, wobei im Übergangsbereich von der Kreisringpartie (10) zur kegelförmigen Partie (11) eine koaxial zur Rotationsachse verlaufende Ringnut (12) in den Teller (2) eingeschnitten ist, die einerseits über im Teller verlaufende Kanäle (13,13',...) an eine Unterdruckquelle angeschlossen ist und andererseits mit sich von der Ringnut (12) aus radial nach innen zu erstreckenden tränen- oder fingerförmigen Vertiefungen oder Aussparungen (14,14',...) in der kegelförmigen Fläche (F) korrespondiert, wobei der Durchmesser und die Tiefe der Ringnut (12) etwa so bemessen sind, daß sie dem Ringwulst (9) des Substrats (5) entsprechen.
